Europäisches Patentamt

(19) European Patent Office

Office européen des brevets

(11) Numéro de publication: **0 058 118**
**B1**

## (12) FASCICULE DE BREVET EUROPEEN

(45) Date de publication du fascicule du brevet:
**15.07.87**

(21) Numéro de dépôt: **82400201.8**

(22) Date de dépôt: **05.02.82**

(51) Int. Cl.⁴: **A 47 J 43/046,** B 26 D 3/22,
A 47 J 43/25

(54) **Robot de cuisine.**

(30) Priorité: **10.02.81 FR 8102550**

(43) Date de publication de la demande:
**18.08.82 Bulletin 82/33**

(45) Mention de la délivrance du brevet:
**15.07.87 Bulletin 87/29**

(84) Etats contractants désignés:
**AT BE CH DE GB IT LI LU NL SE**

(56) Documents cités:
**FR - A - 2 219 618
FR - A - 2 364 013
US - A - 2 477 198
US - A - 3 085 607
US - A - 3 170 674
US - A - 4 002 298
US - A - 4 081 145**

(73) Titulaire: **ROBOT-COUPE S.A., Zone Industrielle des Alouettes, F-71300 Montceau-les-Mines (FR)**

(72) Inventeur: **Ribassin, Patrick Guy Georges, 5 Rue Edouard Vaillant, F-94120 Fontenay sous Bois (FR)**
Inventeur: **Gallardo, Manuel Antoine Raymond, 11 Rue du Temple, F-77500 Chelles (FR)**
Inventeur: **Bertin, Alain Jean Luc, 2 Place de la République, F-77500 Chelles (FR)**

(74) Mandataire: **Viard, Jean, Cabinet VIARD 28 bis, avenue Mozart, F-75016 Paris (FR)**

## Description

La présente invention a pour objet un appareil traiteur de cuisine, du type connu sous le nom de robot de cuisine ou appareil de préparation d'aliments, permettant d'accomplir différents travaux de cuisine par l'action d'un ensemble d'outils entraînés en rotation par un moteur électrique, chaque outil pouvant être monté sur l'arbre du moteur.

Les différentes fonctions spécialisées telles que râpage, éminçage ou coupe de fruits ou légumes, sont chacune accomplies par un outil rotatif généralement en forme de disque, disposé à la partie supérieure de la cuve de l'appareil, les produits étant introduits par une goulotte prévue dans le couvercle.

Compte tenu des vitesses élevées de l'arbre d'entraînement, qu'il s'agisse de l'arbre de sortie du moteur ou de l'arbre de sortie d'un multiplicateur/réducteur, il est nécessaire que la fixation de l'outil sur l'arbre soit suffisamment rigide pour supporter les efforts importants qu'elle doit subir.

Différents moyens sont connus pour accoupler un outil en bout d'arbre. Un premier moyen consiste à prévoir au centre du disque une ouverture à l'intérieur de laquelle vient s'insérer l'extrémité de l'arbre à l'intérieur de laquelle ou sur laquelle est prévu un filetage mâle ou femelle. Une sorte de bouchon portant un filetage inverse vient presser le disque contre un épaulement de l'arbre. Cette première solution, bien qu'économique, n'est pas satisfaisante dans la mesure où la force avec laquelle l'utilisateur visse le bouchon sur l'arbre est très variable de sorte que, pratiquement, l'outil est toujours mal fixé, le bouchon étant trop ou pas assez serré. D'autre part, les risques de grippage entre les deux parties filetées se traduisent par des démontages souvent difficiles et parfois impossibles. Une seconde solution consiste à enclipser l'outil en bout d'arbre, mais cette solution exige un autre outil spécial pour le démontage.

Un autre moyen décrit dans FR-A-2 147 361 consiste à munir chaque outil d'un moyeu cylindrique creux qui vient entourer l'arbre sur une grande partie de sa hauteur et dont la section interne présente un profil complémentaire de la section du bout d'arbre et, par exemple, le bout d'arbre peut présenter un méplat, et la section interne du moyeu un méplat correspondant. Le moyeu est en matière plastique, telle que du polycarbonate par exemple, l'assemblage disque-moyeu étant obtenu par surmoulage. Pour des raisons évidentes, la tôle constituant les disques ne peut pas être très épaisse (son épaisseur est pratiquement de l'ordre de 0,5 mm) et il est par suite nécessaire de la renforcer, ce qui peut être obtenu par des nervures radiales, par exemple au nombre de trois, qui outre leur action de rigidification, permettent un entraînement sans glissement entre le moyeu et le disque, une partie du moyeu pénétrant lors du moulage dans les nervures radiales au voisinage du centre. Ce moyen présente lui aussi des inconvénients. L'un de ceux-ci réside dans le prix de revient de chaque outil. Un autre inconvénient provient de la présence des nervures, en creux à la surface de l'outil mais en relief au-dessous de celle-ci. Lors de la coupe par un couteau éminceur, la partie coupée est projetée à grande vitesse contre l'une desdites nervures, avant de tomber dans la cuve, et si le fruit ou légume émincé est tendre (de la tomate par exemple), il se produit un écrasement de la partie coupée qui s'oppose à une bonne présentation.

Un premier objet de la présente invention est un dispositif de montage dans lequel les produits coupés ne viennent pas en contact avec une surface en rotation.

Dans le brevet US-A-4 002 298 est décrite une machine à râper le fromage dans laquelle peuvent être montés plusieurs disques râpeurs plats montés sur un plateau entraîné par le moteur, le plateau comprenant une couronne reliée au moyeu par des arêtes radiales. L'arbre moteur fait saillie au-dessus du disque et la solidarisation en rotation du plateau et de l'arbre moteur est assurée par un vissage.

Un second objet de la présente invention est un dispositif de montage d'outils différents sur l'arbre moteur d'un robot de cuisine comprenant un moyeu et un plateau porte-outil sur lequel peuvent être montés différents outils.

Un autre problème auquel l'invention apporte une solution est celui du rangement des outils, qui est particulièrement aigu lorsqu'un moyeu s'étend perpendiculairement au plan du disque, mais qui, plus généralement, provient de l'existence d'une multiplicité d'outils dont un seul est utilisé pour chaque opération.

La présente invention a pour objet de remédier aux inconvénients des dispositifs de fixation connus et de proposer une solution élégante au problème du rangement des différents outils en forme de disque.

Selon la présente invention, le robot de cuisine comprenant un moteur électrique contenu dans un carter formant une embase pour une cuve de travail à l'intérieur de laquelle peuvent tourner alternativement plusieurs outils entraînés par un arbre-moteur traversant le fond de ladite cuve lorsque celle-ci est montée d'une manière amovible sur l'embase dont la surface est sensiblement égale à la section de la cuve de travail, un outil en forme générale de disque plat étant monté à l'intérieur de la cuve sur l'arbre d'entraînement du moteur par l'intermédiaire d'un plateau relié par des arêtes radiales à un moyeu, le moyeu présentant une ouverture centrale dont la section est sensiblement égale et de profil inverse à la section de l'arbre d'entraînement, caractérisé en ce que le plateau est formé par une couronne verticale périphérique munie d'encoches ou de lumières, destinées à recevoir des pattes prévues à la périphérie de chaque outil, les arêtes reliant ladite couronne au moyeu, celles-ci étant, après montage d'un outil, à une distance de la surface plane inférieure de l'outil plus grande que la hauteur des lames de l'outil au-dessus de la surface plane supérieure de l'outil, et réparties de façon à dégager un espace libre pour la chute des produits coupés dans la cuve.

Ainsi, le disque est en quelque sorte suspendu sur le plateau de manière à ce que la partie coupée, lorsqu'elle est encore entraînée par la surface inférieure du disque, ne rencontre aucune arête avant de tomber dans le fond de la cuve.

Selon une autre caractéristique de l'invention, un compartiment de rangement des disques est formé à l'intérieur du carter moteur.

D'autres caractéristiques et avantages de l'invention apparaîtront au cours de la description qui va suivre de modes de réalisation, donnés uniquement à titre d'exemples non limitatifs, en regard des figures qui représentent:
- La Fig. 1, une vue par-dessus du plateau;
- La Fig. 2, une coupe du plateau de la Fig. 1, selon la ligne II–II, un disque éminceur étant en position sur le plateau;
- La Fig. 3, une vue par-dessus d'un disque râpeur;
- Les Figs. 4 à 6 des appareils selon l'invention;
- La Fig. 7 un autre type d'appareil selon l'invention.

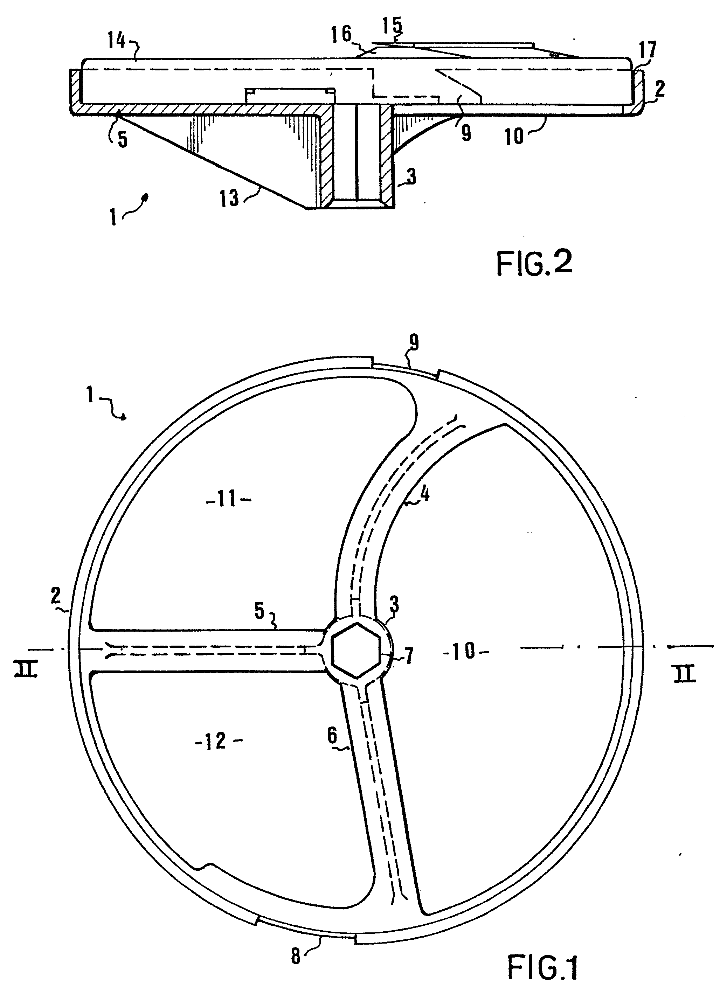

Sur la Fig. 1, le plateau 1 se présente sous la forme d'une couronne circulaire 2, par exemple en matière plastique, reliée à un moyeu 3 par trois arêtes radiales 4, 5 et 6. Le moyeu 3 présente une ouverture centrale 7 qui, dans l'exemple représenté est hexagonale, mais qui plus généralement présente une forme complémentaire de celle de la section de l'extrémité de l'arbre d'entraînement (non représenté). Dans la périphérie de la couronne 2 sont prévues deux encoches 8 et 9 de dimensions différentes, destinées à recevoir des pattes correspondantes formées dans les disques. Cette différence de dimensions constitue un détrompeur qui s'oppose au montage incorrect du disque sur le plateau. De plus, ces encoches permettent un positionnement précis du disque qui est rendu nécessaire compte tenu de la répartition des arêtes 4, 5 et 6. Comme cela apparaît sur la Fig. 1, celles-ci ne sont pas régulièrement réparties, les arêtes 4 et 6 étant sensiblement dans le prolongement l'une de l'autre et l'arête 4 étant incurvée de manière à ce que l'espace 10 soit sensiblement de surface double de celles des espaces 11 et 12. Cette caractéristique a pour but de dégager le dessous de l'outil, de sorte que les parties coupées puissent tomber dans la cuve, sans choc préalable.

On retrouve sur la Fig. 2 qui est une coupe selon la ligne II–II de la Fig. 1, des éléments précédemment mentionnés, à savoir, le moyeu 3, la couronne 2, l'arête 5 reliée au moyeu 3 par une nervure 13. Sur le plateau 1, est monté un disque éminceur 14, présentant un couteau 15 s'étendant, en forme d'arc de cercle, au-dessus d'une fente 16, sur sensiblement la longueur d'un rayon. Le disque 14 repose sur la couronne 2 par son bord rabattu 17, son maintien axial étant assuré par des pattes pénétrant dans les encoches 8 et 9, disposées de sorte que les efforts tangentiels qui s'exercent sur le disque lors de la coupe, poussent lesdites pattes contre le fond des encoches, la réaction due à cet appui étant ainsi proportionnelle à l'effort appliqué. La lame 15 du couteau est, par exemple, soudée sur un crevé et elle est disposée au voisinage de l'arête 4 et sensiblement parallèle à celle-ci. Ainsi, les parties coupées de fruits ou légumes tombent dans l'espace 10, si le sens de rotation de l'outil est le sens direct ou sinistrorsum. La découpe de l'encoche 9 apparaît en pointillés sur la Fig. 2. La surface inférieure du moyeu 3 s'appuie sur un épaulement de l'arbre d'entraînement (non représenté). Pour éviter que les produits coupés ne viennent heurter l'une des arêtes 4, 5, ou 6, la hauteur du bord rabattu 17 est très supérieure à la hauteur de la lame 15 au-dessus du plan du disque 14. La hauteur du bord rabattu 17, qui par ailleurs assure une bonne rigidité au disque, permet de régler la distance entre le bord inférieur de la goulotte (non représentée) et la partie active de l'outil telle qu'une lame par exemple.

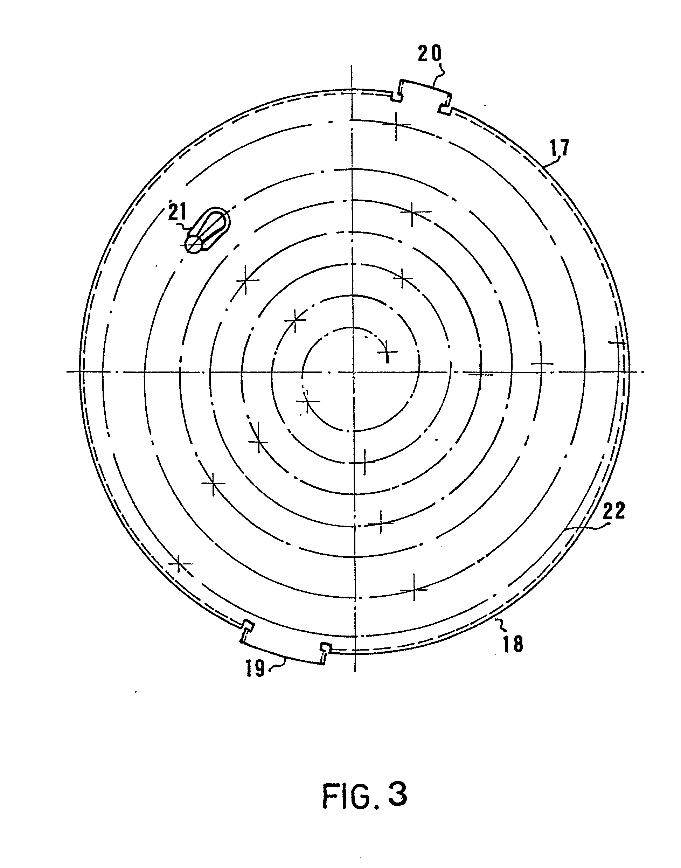

La Fig. 3 représente en vue par-dessus une râpe circulaire 18. A sa périphérie s'étendent radialement deux pattes 19 et 20 qui, après montage sur le plateau, sont respectivement bloquées dans les encoches 8 et 9. Dans la surface du disque 18 sont formés des «crevés» dont un seul 21 a été représenté sur le dessin et qui sont, par exemple, au nombre de dix huit, répartis sur une spirale 22 figurée en traits mixtes.

Le support qui vient d'être décrit permet ainsi de monter sur l'arbre moteur un ensemble d'outils remplissant des fonctions différentes, ces outils présentant tous une forme de disques de même diamètre et des pattes appropriées pouvant pénétrer dans les encoches de la couronne. La hauteur du moyeu 3 peut être suffisamment réduite pour permettre le rangement de celui-ci dans un compartiment spécial destiné à contenir les différents disques.

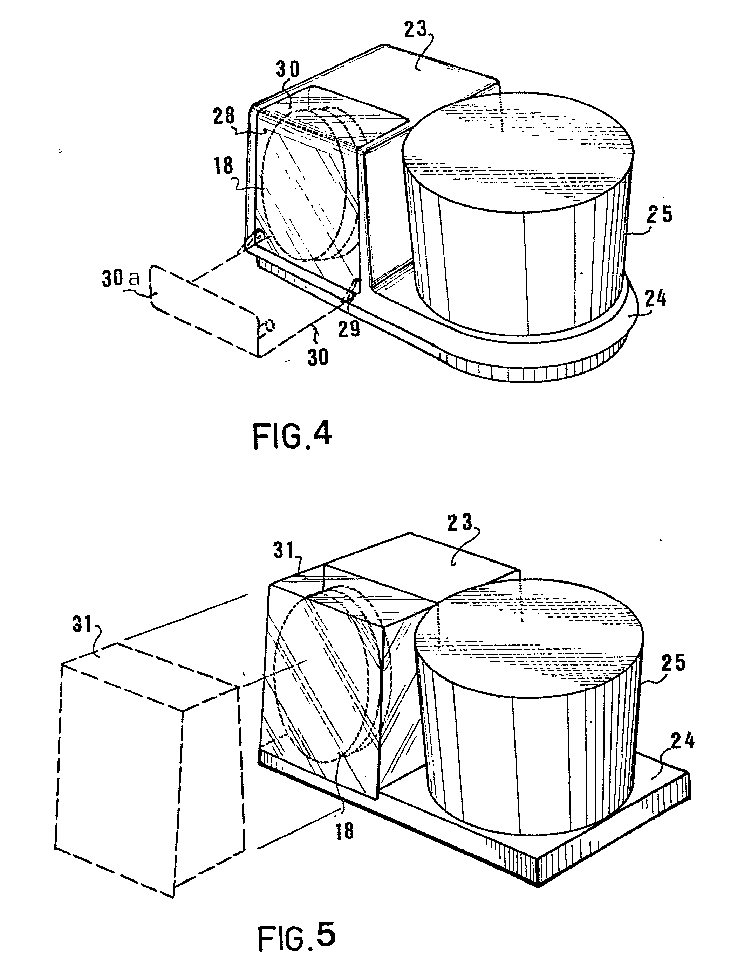

Les Figs. 4 à 7 représentent un tel compartiment dans des modes de réalisation différents.

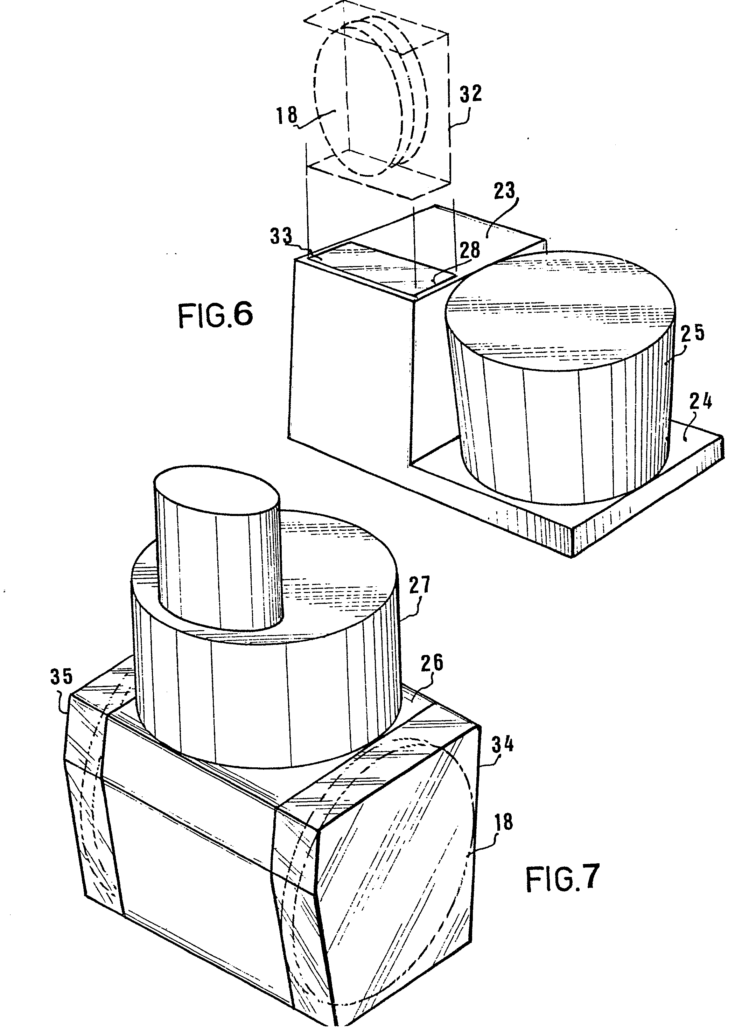

Sur les Figs. 4 à 6, le moteur (non représenté) est contenu dans un carter 23, son axe étant vertical et parallèle à celui de la cuve 25 qui est elle-même assujettie d'une manière amovible sur un socle 24 solidaire du carter du moteur. Sur la Fig. 7, le moteur est inclus dans un carter 26, au-dessous de la cuve 27, de sorte que l'axe du moteur et l'axe de la cuve soient alignés.

Sur la Fig. 4, le moteur est excentré par rapport à l'axe de symétrie de la cuve 25 et de son socle 24. La transmission du mouvement étant obtenue par une courroie, cette disposition ne présente pas d'inconvénient. Un espace peut ainsi être dégagé et, selon l'invention, cet espace est utilisé pour réaliser un compartiment de rangement des outils en forme de disque, tels que ceux qui ont été mentionnés précédemment. Ce compartiment comporte un casier 28 muni de rainures dans lesquelles peuvent être glissés les disques 18 qui sont ainsi maintenus. Le compartiment est fermé par un couvercle 30 qui est, par exemple monté pivotant autour de deux charnières 29, la partie supérieure 30a du couvercle pouvant être fixée d'une manière amovible dans la paroi supérieure du carter 23 par tout moyen approprié. De préférence, les rainures mentionnées ci-dessus ne sont pas régulièrement réparties et un emplacement est prévu pour introduire dans le compartiment le support de disques mentionné ci-dessus.

La Fig. 5 représente un mode de réalisation dans lequel le couvercle 31 est simplement encastré d'une manière amovible dans le carter 23 du moteur. Lorsque l'on désire travailler avec un disque contenu dans le compartiment 28, on retire le couvercle 31 et l'on prélève le disque choisi dont l'emplacement peut être occupé par un autre outil circulaire, puis le couvercle 31 est remis en place. Le couvercle 31 peut, par exemple, venir s'encliqueter par des taquets (non représentés) dans des encoches prévues dans le carter 23.

Sur la Fig. 6, les outils circulaires sont contenus dans un tiroir 32 qui peut glisser à l'intérieur du carter 23. De préférence, l'introduction du tiroir 32 dans le compartiment 28 provoque la compression d'un ressort de rappel dont la compression est contenue par un cliquet par exemple. Par dégagement du cliquet, le tiroir est repoussé par le ressort et émerge du socle d'une hauteur suffisante pour en permettre la préhension et l'extraction ou permettre l'accès au tiroir. Lorsque le tiroir 32 est à l'intérieur du carter 23, le compartiment 28 est fermé par un couvercle 33, qui peut être, par exemple, transparent.

La Fig. 7 représente un autre type de traiteur ou robot de cuisine. Lorsque le moteur est central, il est possible de prévoir deux compartiments latéraux 34 et 35 symétriques et dont chacun peut contenir un certain nombre d'outils. Il est bien entendu possible d'excentrer le moteur et de transmettre le mouvement par un pignon, de façon à n'avoir qu'un seul compartiment latéral de contenance suffisante pour l'ensemble des outils.

L'outil peut également être fixé sur son support, non par les encoches qui ont été décrites, mais par un encliquetage réalisé par recouvrement du bord supérieur de l'outil par le bord supérieur du support, ou par une partie de celui-ci.

## Revendications

1. Robot de cuisine comprenant un moteur électrique contenu dans un carter (23, 26) formant une embase pour une cuve de travail (25, 27) à l'intérieur de laquelle peuvent tourner alternativement plusieurs outils (14, 18) entraînés par un arbre-moteur traversant le fond de ladite cuve lorsque celle-ci est montée d'une manière amovible sur l'embase (23, 26) dont la surface est sensiblement égale à la section de la cuve de travail (25, 27) un outil (14, 18) en forme générale de disque plat étant monté à l'intérieur de la cuve (25, 27) sur l'arbre d'entraînement du moteur par l'intermédiaire d'un plateau (1) relié par des arêtes radiales (4, 5, 6) à un moyeu (3), le moyeu (3) présentant une ouverture centrale (7) dont la section est sensiblement égale et de profil inverse à la section de l'arbre d'entraînement, caractérisé en ce que le plateau (1) est formé par une couronne verticale périphérique (2) munie d'encoches (8, 9) ou de lumières, destinées à recevoir des pattes (19, 20) prévues à la périphérie de chaque outil (14, 18), les arêtes (4, 5, 6) reliant ladite couronne au moyeu, celles-ci étant, après montage d'un outil (14, 18), à une distance de la surface plane inférieure de l'outil (14, 18) plus grande que la hauteur des lames (15) de l'outil au-dessus de la surface plane supérieure de l'outil (14, 18), et réparties de façon à dégager un espace libre (10) pour la chute des produits coupés dans la cuve (25, 27).

2. Robot de cuisine selon la revendication 1, caractérisé en ce qu'un compartiment de rangement (28) des disques (14, 18) est formé dans le carter moteur (23).

3. Robot de cuisine selon la revendication 2, caractérisé en ce que le compartiment (28) étant ménagé dans l'une des parois du carter (23), le compartiment (28) est fermé par un couvercle (30) articulé sur des charnières (29).

4. Robot de cuisine selon la revendication 2, caractérisé en ce que le compartiment (28) est constitué par une cavité formée dans le carter (23), les outils étant glissés dans un tiroir coulissant (32).

5. Robot de cuisine selon la revendication 2, caractérisé en ce que le compartiment de rangement (28) est constitué par deux espaces (34, 35) latéraux au carter (23) fermés par des couvercles encliquetables.

6. Outil destiné à être monté sur un robot de cuisine selon la revendication 1, caractérisé en ce qu'il comprend un disque (14) dont la surface supérieure porte des reliefs de coupe (15, 16, 21) et dont la face inférieure est plane, le bord (17) du disque étant rabattu à angle droit et des pattes (19, 20) de dimensions différentes, diamétralement opposées, étant découpées dans le rebord (17).

7. Outil selon la revendication 6, caractérisé en ce qu'il comporte un ensemble de crevés (21) disposés en spirale.

## Claims

1. A food processor comprising an electric motor contained in a housing (23, 26) forming a base for a work bowl (25, 27) within which a plurality of tools (14, 18) can rotate in alternation under drive from a drive shaft passing through the bottom of the said bowl when it is removably mounted on the base (23, 26), the area of the base being substantially equal to the section of the work bowl (25, 27), a tool (14, 18) having the general shape of a flat disk being mounted inside the bowl (25, 27) on the motor drive shaft by means of a plate (1) connected by radial arms (4, 5, 6) to a hub (3), the hub having a central opening (7) whose section is substantially equal to and inverse in profile to the section of the drive shaft, characterized in that the plate (1) is formed by a vertical peripheral ring (2) having notches (8, 9) or openings for receiving lugs (19, 20) provided at the periphery of each tool (14, 18), the arms (4, 5, 6) connecting said ring to the hub being located, after a tool (14, 18) has been fitted, at a distance from the plane bottom surface of the tool (14, 18) which is greater than the height of the blades (15) of the tool above the plane top surface of the tool (14, 18), and being distributed in such a manner as to leave an empty space (10) to allow food choppings to drop through into the bowl (25, 27).

2. A food processor according to claim 1, characterized in that a storage compartment (28) is formed in the motor housing (23) for the disks (14, 18).

3. A food processor according to claim 2, characterized in that the compartment (28) is provided in one of the walls of the housing (23), and the compartment (28) is closed by a lid (30) hinged on hinges (29).

4. A food processor according to claim 2, characterized in that the compartment (28) is constituted by a cavity formed in the housing (23) and the tools are slid in a sliding drawer (32).

5. A food processor according to claim 2, characterized in that the storage compartment (28) is constituted by two side spaces (34, 35) in the housing (23) and closed by snap-fastening lids.

6. A tool for fitting to a food processor according to claim 1, characterized in that it comprises a disk (14) whose top surface bears cutting projections (15, 16, 21) and whose bottom surface is plane, the rim of the disk extending back at right angles with diametrically opposite lugs (19, 20) of different sized being cut out from the rim (17).

7. A tool according to claim 6, characterized in that it includes a set of punched grating protuberances (21) disposed in a spiral.

**Patentansprüche**

1. Küchenmaschine mit einem Elektromotor, der in einem Gehäuse (23, 26) angeordnet ist, das einen Sockel für eine Arbeitsschale (25, 27) bildet, in deren Innerem wechselweise mehrere Werkzeuge (14, 18) drehen können, die von einer Motorwelle angetrieben werden, die den Boden der besagten Schale durchdringt, wenn dies in abnehmbarer Weise auf dem Sockel (23, 26) angeordnet ist, dessen Oberfläche im wesentlichen gleich dem Querschnitt der Arbeitsschale (25, 27) ist, mit einem Werkzeug (14, 18) mit im wesentlichen der Form einer flachen Scheibe, das im Inneren der Schale (25, 27) auf der Antriebswelle des Motors mittels einer Platte (1) angeordnet ist, die mit radialen Halterungen (4, 5, 6) mit einer Nabe (3) verbunden ist, die eine zentrale Öffnung (7) besitzt, deren Querschnitt im wesentlichen gleich und von umgekehrtem Profil wie der Querschnitt der Antriebswelle ist, dadurch gekennzeichnet, dass die Platte (1) aus einem vertikalen umlaufenden Kranz gebildet ist, der mit mehreren Einschnitten (8, 9) oder Aussparungen versehen ist, die dazu bestimmt sind, Klauen (19, 20) aufzunehmen, die an dem Umfang von jedem Werkzeug (14, 18) angebracht sind, wobei die den Kranz mit der Nabe verbindenden Halterungen (4, 5, 6) sich nach dem Anbringen eines Werkzeuges in einer Entfernung von der ebenen, unteren Fläche des Werkzeuges befinden, die grösser ist als die Höhe der Klingen (15) des Werkzeuges über der ebenen oberen Fläche des Werkzeuges (14, 18), und wobei die Halterungen verteilt sind, um einen Freiraum (10) für das Herunterfallen der geschnittenen Produkte in die Schale (25, 27) freizumachen.

2. Küchenmaschine nach Anspruch 1, dadurch gekennzeichnet, dass ein Ablageraum (28) für die Scheiben (14, 18) in dem Motorgehäuse (23) gebildet ist.

3. Küchenmaschine nach Anspruch 2, dadurch gekennzeichnet, dass der Ablageraum (28), der in einer der Wände des Gehäuses (23) untergebracht ist, mit einem um Scharniere (29) schwenkbaren Deckel (30) verschlossen ist.

4. Küchenmaschine nach Anspruch 2, dadurch gekennzeichnet, dass der Ablageraum (28) aus einem in dem Gehäuse (23) gebildeten Hohlraum geschaffen ist und dass die Werkzeuge in ein Schubfach (32) eingeschoben sind.

5. Küchenmaschine nach Anspruch 2, dadurch gekennzeichnet, dass der Ablageraum (28) aus zwei seitlichen Räumen (34, 35) am Gehäuse (23) gebildet ist, die durch einklipsbare Deckel verschlossen sind.

6. Werkzeug, das dazu bestimmt ist, auf einer Küchenmaschine nach Anspruch 1 angeordnet zu werden, dadurch gekennzeichnet, dass es eine Scheibe (14) enthält, deren obere Fläche Schneidprofile (15, 16, 21) aufweist und deren untere Fläche eben ist, wobei der Rand (17) der Scheibe rechtwinklig abgewinkelt ist und wobei Klauen (19, 20) unterschiedlicher Abmessungen diametral gegenüberliegend aus dem umgebogenen Rand (17) ausgeschnitten sind.

7. Werkzeug nach Anspruch 6, dadurch gekennzeichnet, dass es eine Garnitur aus Schabern oder Schneiden (21) enthält, die spiralenförmig angeordnet sind.

FIG.2

FIG.1

FIG. 3

FIG.4

FIG.5

0 058 118

FIG.6

FIG.7